# FASCICULE DE BREVET EUROPEEN

(11) **EP 0 760 092 B1**
(45) Date de publication et mention de la délivrance du brevet: **04.02.1998**
(21) Numéro de dépôt: 95920931.3
(22) Date de dépôt: 09.05.1995
(51) Int. Cl.: G01N 21/53

(54) **PROCEDE ET APPAREIL D'ANALYSE DES PHASES D'UN MELANGE POLYPHASIQUE**
VERFAHREN UND GERÄT ZUR PHASENANALYSE EINER MEHRPHASENMISCHUNG
METHOD AND APPARATUS FOR ANALYSING THE PHASES OF A MULTI-PHASE MIXTURE

(30) Priorité: 17.05.1994 FR 9406284
(43) Date de publication de la demande: 05.03.1997
(73) Titulaire: Meunier, Gérard, 31320 Castanet Tolosan (FR)
(72) Inventeur: Meunier, Gérard, 31320 Castanet Tolosan (FR)
(74) Mandataire: Morelle, Guy Georges Alain
(86) Numéro de dépôt international: FR9500599
(87) Numéro de publication internationale: WO9531712

(56) Documents cités:
- US-A- 4 099 871
- US-A- 4 263 511
- US-A- 4 457 624
- US-A- 4 697 925
- US-A- 4 838 692
- US-A- 5 036 212
- US-A- 5 120 979
- PATENT ABSTRACTS OF JAPAN vol. 10, no. 348 (P-519) 22 Novembre 1986 & JP,A,61 148 349 (SHIZUOKA) 7 Juillet 1986
- PATENT ABSTRACTS OF JAPAN vol. 5, no. 130 (P-77) 26 Août 1981 & JP,A,56 072 328 (CENTRAL GLASS) 16 Juin 1981

## Description

La présente invention se rapporte aux procédés et instruments pour l'analyse des phases d'un mélange polyphasique, permettant notamment la détection et la mesure de phénomènes naissants de démixtion, de sédimentation dans des mélanges en fonction du temps, par exemple des émulsions ou des suspensions. Les domaines d'application de l'invention comprennent en particulier l'industrie chimique et para-chimique, et plus largement tous les domaines pour lesquels il est nécessaire d'analyser la structure ainsi que la stabilité d'un mélange polyphasique ou de déceler la structure d'un mélange.

L'Art Antérieur enseigne un dispositif pour la détermination du nombre de phases d'un mélange partiellement liquide. Ce dispositif comprend une cellule parallélépipédique verticale dans laquelle on place le mélange, et que l'on soumet à un rayonnement optique. Un capteur optique, placé en regard de l'émetteur optique permet de détecter le rayonnement transmis par le mélange. Le déplacement de l'émetteur et du capteur le long de la hauteur de la cellule permet de compter les phases présentes dans le mélange par les variations de mesure de la transmission optique dans chaque phase et à l'interface des phases.

Un tel dispositif utilisant uniquement la transmission optique à travers le mélange permet des applications limitées à des mélanges transparents ou présentant une faible turbidité, et des analyses permettant seulement de déterminer le nombre de phases d'un mélange. De plus, l'utilisation d'une cellule parallélépipédique ne permet pas un bon remplissage pour un mélange fortement visqueux, et ne permet pas non plus une bonne homogénéité de mixtion du mélange par brassage.

L'Art Antérieur enseigne également un dispositif permettant de pallier en partie ces inconvénients. Celui-ci utilise un capteur du rayonnement diffusé par le mélange et permet ainsi de déceler, grâce aux différences de turbidité du mélange, des phases différentes contenues dans celui-ci.

Ce dispositif permet seulement des applications sur des mélanges présentant une turbidité moyenne, de part le principe de détection du rayonnement diffusé qui demande une certaine transparence du mélange. Ce dispositif ne permet pas de ce fait l'étude de mélanges opaques ou fortement turbides.

La présente invention permet essentiellement de remédier à ces inconvénients. Plus particulièrement, elle consiste en un procédé d'analyse des phases d'un mélange polyphasique, comprenant au moins les étapes suivantes :
- placer ledit mélange dans une cellule de mesure tubulaire de section cylindrique,
- émettre un rayonnement électromagnétique en direction de ladite cellule de mesure, caractérisé en ce que ledit procédé consiste à :
- détecter le rayonnement électromagnétique rétrodiffusé par ledit mélange dans un plan perpendiculaire à un axe longitudinal de ladite cellule de mesure tubulaire, ledit axe longitudinal étant disposé verticalement, et ladite cellule de mesure étant transparente,
- effectuer une pluralité de détections dudit rayonnement électromagnétique rétrodiffusé selon un pas déterminé sur la longueur totale de l'axe longitudinal de ladite cellule de mesure tubulaire, ladite pluralité de détections constituant un cycle de mesures dudit mélange.

Le procédé selon l'invention permet une analyse de mélange présentant une forte turbidité ou opaque, en découpant le mélange en tranches de mesure perpendiculaires à l'axe longitudinal de la cellule, grâce à une détection par rétrodiffusion du rayonnement électromagnétique, tout en permettant par l'intermédiaire de l'utilisation d'une cellule de mesure logeant un mélange dans une partie tubulaire de section cylindrique de la cellule, avantageusement une partie de section circulaire, d'obtenir un mélange homogène dans la cellule lors d'une mixtion. Le balayage de la cellule par des détections effectuées selon pas déterminé permet d'obtenir ainsi un cycle de mesures formant un profil de phase du mélange. Un balayage fin, avantageusement inférieur ou égal à l'épaisseur du plan de détection, permet de détecter dans le mélange des phénomènes naissants notamment, de démixtion, de coalescence ou de floculation à n'importe quel endroit de celui-ci.

Selon une caractéristique avantageuse, le procédé suivant l'invention consiste à:
- détecter le rayonnement électromagnétique transmis par ledit mélange dans ledit plan perpendiculaire à l'axe longitudinal de ladite cellule de mesure tubulaire,
- effectuer une pluralité de détections dudit rayonnement électromagnétique transmis selon ledit pas, ladite pluralité de détections dudit rayonnement électromagnétique transmis étant incluse dans ledit cycle de mesures dudit mélange.

Cette caractéristique permet l'analyse de mélange faiblement turbide ou transparent, et en coopération avec la détection du rayonnement électromagnétique rétrodiffusé par le mélange, procure des possibilités d'analyse de tous types de mélanges polyphasiques, transparents, turbides, opaques.

Selon une autre caractéristique avantageuse, ledit plan a une épaisseur comprise entre 30 et 50 micromètres.

Cette caractéristique permet une résolution fine de mesure, autorisant la détection de phénomènes naissants notamment, de démixtion, de sédimentation, de coalescence ou de crémage dans les mélanges, caractéristique particulièrement intéressante pour l'étude de la stabilité dans le temps d'un mélange sans attendre l'apparition complète du phénomène qui peut être relativement longue.

Selon une autre caractéristique avantageuse, ledit rayonnement électromagnétique rétrodiffusé est détecté selon un angle compris entre 90° et 180° par rapport à la direction d'émission dudit rayonnement électromagnétique.

Cette caractéristique permet une détection optimisée du rayonnement électromagnétique rétrodiffusé par un mélange présentant une forte opacité, notamment à proximité de l'interface courbe cellule-mélange.

Selon une autre caractéristique avantageuse, le procédé selon l'invention consiste à détecter ledit rayonnement électromagnétique rétrodiffusé à un point de l'interface cellule-mélange.

Cette caractéristique permet l'analyse de mélange fortement turbide, les rayons rétrodiffusés n'ayant pas à pénétrer profondément dans le mélange pour être détectés en rétrodiffusion.

Selon une autre caractéristique avantageuse, le procédé selon l'invention consiste à renouveler ledit cycle de mesures selon un intervalle de temps déterminé.

Cette caractéristique permet d'obtenir des profils de,phase d'un mélange à des moments différents, autorisant l'étude de la stabilité ou de l'évolution du mélange en fonction du temps.

Selon une autre caractéristique avantageuse, le procédé selon l'invention consiste à mettre en mémoire au moins un desdits cycles de mesures, et selon d'autres caractéristiques avantageuses, il consiste à traiter lesdits cycles de mesures, et à comparer ces derniers afin de connaître l'évolution des phases dans ledit mélange entre lesdits cycles de mesures.

Ces caractéristiques permettent d'obtenir une cinétique du mélange, le traitement des cycles de mesures permettant essentiellement de rendre comparable deux profils de phase d'un mélange, espacés dans le temps en corrigeant notamment la déshydratation du mélange au cours du temps.

L'invention a aussi pour objet un appareil d'analyse des phases d'au moins un mélange polyphasique permettant de mettre en oeuvre un procédé selon l'invention d'analyse des phases d'un mélange polyphasique.

L'invention sera mieux comprise et d'autres avantages et caractéristiques apparaîtront à la lecture de la description, d'un exemple de mode de réalisation d'un appareil selon l'invention d'analyse des phases d'un mélange polyphasique, et de quelques exemples d'applications qui suivent, accompagnés des dessins annexés, exemples donnés à titre d'illustration sans qu'aucune interprétation restrictive de l'invention ne puisse en être tirée.

La Figure 1 représente un mode de réalisation d'un appareil selon l'invention en vue de face et en coupe.

La Figure 2 représente une coupe partielle suivant la ligne I-I de la Figure 1.

La Figure 3 illustre un exemple d'application de l'appareil selon l'invention montrant une pluralité de cycles de mesures dans un mélange pris à des instants différents.

La Figure 4 illustre un exemple de traitement des cycles de mesures de la Figure 3.

La Figure 5 illustre une comparaison des cycles de mesures traités de la Figure 4 et montre l'évolution des phases dans le mélange au cours du temps.

La Figure 6 illustre à titre comparatif une perception visuelle de l'évolution des phases représentée sur la Figure 5.

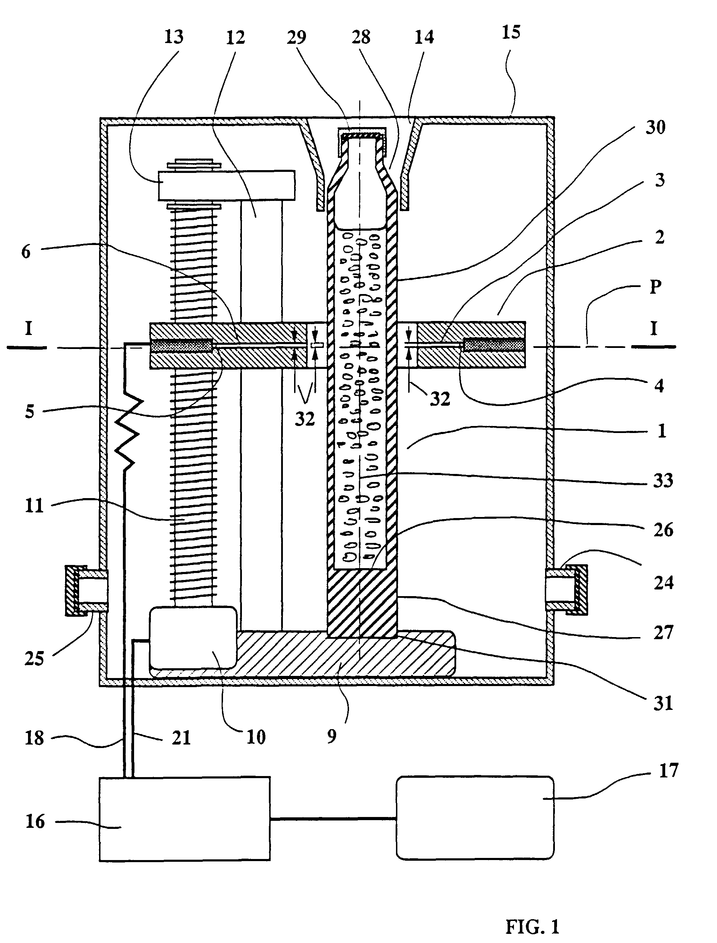

L'appareil représenté sur la Figure 1 comprend une cellule 1 de mesure contenant un mélange polyphasique à analyser. La cellule 1 possède une partie supérieure 28 ouverte pour permettre le remplissage de celle-ci, la partie supérieure 28 étant obturée par un bouchon 29 avantageusement vissé. La partie supérieure 28 de la cellule 1 peut notamment être munie de tout moyen d'accrochage connu (non représenté) apte à coopérer avec un appareil de centrifugation. La cellule 1 possède avantageusement une partie inférieure 27 à fond 26 plat et horizontal de façon à ce que le fond 26 soit compris dans un plan de mesure, comme cela sera expliqué plus loin. La partie inférieure 27 possède une hauteur apte au dégagement du support mobile 2 au dessous du fond 26 pour assurer un balayage complet du mélange. Les parties supérieure 28 et inférieure 27 sont reliées par une partie intermédiaire 30 tubulaire de section circulaire logeant ledit mélange, ce dernier se présentant ainsi dans la cellule 1 de mesure avantageusement sous la forme d'un cylindre droit vertical de section circulaire.

La cellule 1 est disposée dans l'appareil de façon verticale, avantageusement positionnée en appui vertical dans un logement 31 sur un socle 9, et positionnée en appui latéral dans un orifice 14 d'entrée de la cellule, l'orifice 14 étant de forme complémentaire à la cellule 1 et ajusté à celle-ci. L'orifice 14 est porté par une enceinte 15 qui sera décrite plus loin.

Il est à noter que la cellule 1 peut, de manière alternative, être positionnée en appui vertical sur l'orifice 14 de l'enceinte 15 par l'intermédiaire de la partie supérieure 28 selon tout moyen connu. Dans ce cas (non représenté), la partie inférieure 27 de la cellule 1 n'est pas en contact avec le support 9, l'espace entre la partie inférieure 27 et le support 9 servant notamment au dégagement du support mobile 2 au dessous du fond 26 pour assurer un balayage complet du mélange.

La partie intermédiaire 30 au moins de la cellule 1 est réalisée par exemple en verre ou en matériaux plastiques transparents, afin d'assurer une transmission du rayonnement électromagnétique.

L'appareil illustré sur la Figure 1 comprend un support mobile 2 qui porte des moyens d'émission d'un rayonnement électromagnétique en direction de ladite cellule de mesure, des moyens de détection pour détecter un rayonnement électromagnétique rétrodiffusé par ledit mélange, et avantageusement des moyens de détection pour détecter un rayonnement électromagnétique transmis par ledit mélange.

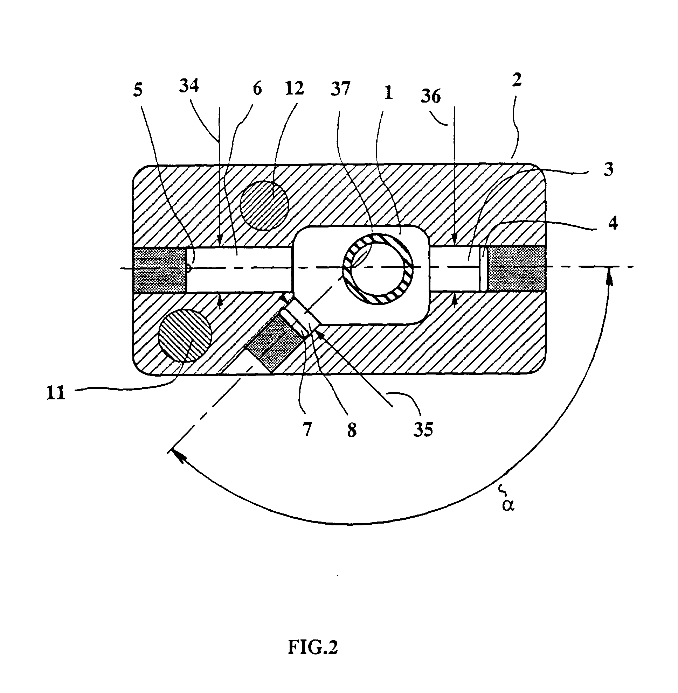

Comme le représentent les Figures 1 et 2, le support mobile 2 entoure la cellule 1 de mesure et porte des moyens d'émission d'un rayonnement électromagnétique, avantageusement au moins une diode électroluminescente 5 qui émet dans le proche infrarouge, et plus particulièrement dans une longueur d'onde de 860 nanomètres. Le rayonnement émis par la diode 5 traverse une fente rectiligne 6 horizontale avantageusement d'une largeur 32 comprise entre 30 et 50 micromètres, et préférablement égale à 40 micromètres, positionnée de façon à permettre une irradiation du mélange suivant un plan P, d'une épaisseur comprise entre 30 et 50 micromètres, et préférablement égale à 40 micromètres, perpendiculaire à l'axe longitudinal 33 de la partie intermédiaire 30 de la cellule 1 de mesure. Une caractéristique importante du plan P d'irradiation est qu'il soit parallèle, le cas échéant, à la surface libre du mélange contenu dans la cellule 1.

Le rayonnement électromagnétique rétrodiffusé par le mélange est capté par des moyens de détection, avantageusement au moins une photodiode 7, selon un angle α compris entre 90° et 180°, avantageusement égal à 135° par rapport à la direction d'émission du rayonnement électromagnétique, comme le représente la figure 2. Le rayonnement électromagnétique rétrodiffusé est détecté par la photodiode 7 après avoir traversé une fente rectiligne 8 horizontale avantageusement d'une largeur 32 comprise entre 30 et 50 micromètres, et préférablement égale à 40 micromètres, la fente 8 étant situé dans un même plan que la fente 6 d'émission.

Le rayonnement électromagnétique transmis par le mélange est capté par des moyens de détection, avantageusement au moins une photodiode 4, directement face à la direction d'émission du rayonnement électromagnétique, comme le représente la figure 2. Le rayonnement électromagnétique transmis est détecté par la photodiode 4 après avoir traversé une fente rectiligne 3 horizontale avantageusement d'une largeur 32 comprise entre 30 et 50 micromètres, et préférablement égale à 40 micromètres, la fente 3 étant situé dans un même plan que la fente 6 d'émission.

La longueur 34 de la fente 6 d'émission sera avantageusement de l'ordre de 40% du diamètre de la partie intermédiaire 30 de la cellule 1 et symétrique par rapport à celui-ci, et la longueur 36 de la fente 3 de transmission sera avantageusement de l'ordre de 50% du diamètre de la partie intermédiaire 30 de la cellule 1.

La longueur 35 de la fente 8 de rétrodiffusion sera déterminée en fonction de l'angle a de façon à ce qu'elle puisse recueillir le maximum de rayonnement rétrodiffusé. L'axe longitudinal de la fente 8 de rétrodiffusion sera avantageusement sécant avec l'axe longitudinal de la fente 6 d'émission en un point 37 de l'interface cellule-mélange, comme le représente la Figure 2.

L'appareil représenté sur la Figure 1 comprend des moyens de déplacement du support mobile 2 parallèlement à l'axe longitudinal 33 de la partie intermédiaire 30 de la cellule 1. Les moyens de déplacement comprennent par exemple un moteur 10 pas à pas fixé sur le socle 9 et qui commande la rotation d'une vis 11 verticale traversant le support mobile 2, la vis 11 entraînant une translation de ce dernier immobilisé en rotation par ailleurs sur une colonne 12. Le pas de rotation du moteur 10 et le pas de la vis seront choisis de manière à permettre un pas de déplacement maximum du support mobile 2 en translation inférieur ou égal à la largeur 32 des fentes 3, 8. Une pièce de liaison 13 réunie la vis 11 et la colonne 12 à leur sommet afin d'améliorer la rigidité de l'ensemble et d'assurer le guidage en rotation de la vis 13.

La course verticale du support mobile 2 doit permettre avantageusement de balayer toute la hauteur de la partie intermédiaire 30 de la cellule 1, qui contient le mélange étudié. A cet effet, le plan de mesure contenant les fentes 3, 6, et 8 doit pouvoir balayer le fond 26 de la cellule, et la surface supérieure du mélange, par exemple la surface libre de celui-ci comme représenté sur la Figure 1. Il est à noter que l'on peut envisager l'utilisation de cellule dont la partie inférieure est hémisphérique, selon l'analyse désirée, et dans ce cas, le plan de mesure peut ou peut ne pas atteindre la partie inférieure du mélange.

L'appareil représenté sur la Figure 1 comprend une enceinte 15 enveloppant au moins la cellule 1 et le support mobile 2 et avantageusement le socle 9 et les moyens de déplacement du support mobile 2. L'enceinte 15 est avantageusement isolée thermiquement, et comporte des moyens de raccordement, 24 et 25 pour des conduits (non représentés) de circulation de fluide établi par des moyens de régulation thermique (non représentés) pour réguler la température à l'intérieur de l'enceinte 15. A cet effet, l'enceinte 15 peut comprendre tout moyen connu de capteur de température (non représenté). L'enceinte 15 présente en partie supérieure un orifice 14 pour l'introduction de la cellule 1 à l'intérieur de celle-ci, comme cela a déjà été détaillé plus haut. L'orifice 14, ainsi que la cellule comportent avantageusement tout moyen de positionnement connu permettant un replacement de la cellule 1 dans l'enceinte 15 dans une position angulaire identique à une précédente position. Ce moyen de positionnement peut par exemple être constitué d'un trait sur la cellule 1 en regard d'une marque sur l'orifice 14, ou d'un système d'ergot en regard d'un logement coopérant avec ce dernier (non représentés).

La ou les diodes émettrices 5, les photodiodes de détection des rayonnements rétrodiffusé et transmis, respectivement 7 et 4, le moteur 10 de déplacement du support mobile 2, le capteur de température et les moyens de régulation thermique le cas échéant (non représentés), sont connectés à des moyens électroniques 16 de commande et de mesure par des câbles 18, les moyens électroniques 16 étant reliés avantageusement à des moyens 17 informatiques servant d'interface entre l'appareil selon l'invention et un utilisateur.

Les moyens électroniques 16 permettent notamment de commander le moteur 10 pour des déplacements successifs du support mobile 2 en translation, de commander l'émission de la diode 5, de réaliser une détection des rayonnements rétrodiffusé et transmis pour chaque déplacement, de mesurer respectivement la quantité de rayonnement rétrodiffusé et la quantité de rayonnement transmis par le mélange en comparaison de la quantité de rayonnement rétrodiffusé et de la quantité de rayonnement transmis par des moyens d'étalons respectifs de façon à obtenir un cycle de mesures du mélange correspondant à la hauteur complète de celui-ci dans la cellule 1.

Les moyens d'étalons (non représentés) sont avantageusement internes à l'appareil selon l'invention, et peuvent par exemple être l'air pour le rayonnement transmis et une référence opaque placée, sur la cellule 1 en partie inférieure 27 ou supérieure 28 de celle-ci, ou sur le support 9, pour le rayonnement rétrodiffusé.

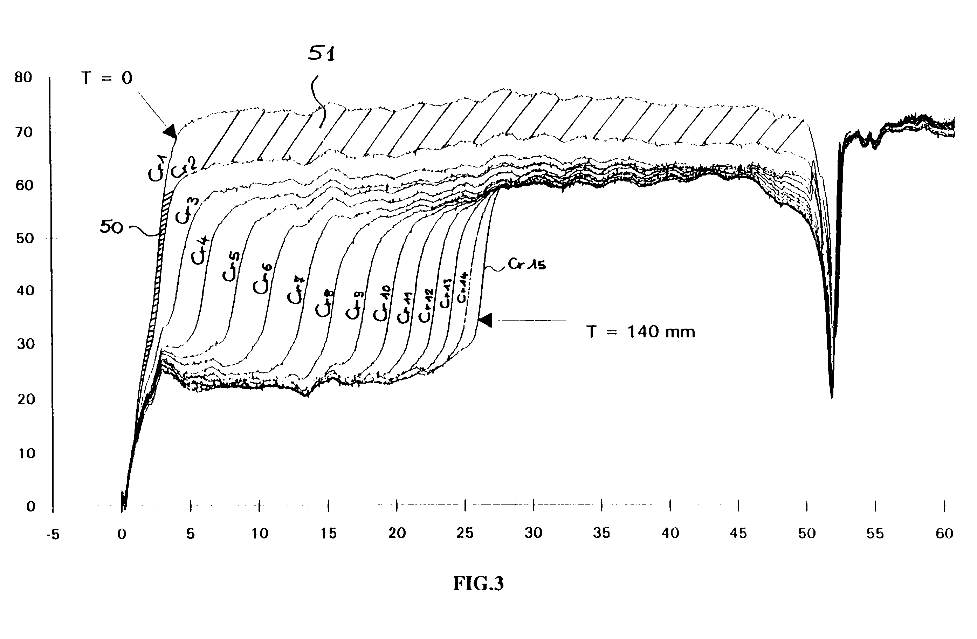

Les moyens 17 informatiques peuvent être un micro-ordinateur qui comprend avantageusement des moyens de mémoire des cycles de mesures transmis par l'électronique de mesure, des moyens de mesure du temps pour effectuer plusieurs cycles de mesures à des instants différents, et des moyens de logiciels permettant la transmission d'une pluralité d'instructions données par un utilisateur, à l'électronique de commande, et permettant un traitement des cycles de mesures en vue de leur exploitation analytique. Les moyens 17 informatiques comportent avantageusement un écran et/ou une imprimante (non représentés) permettant une visualisation des mesures, notamment sous forme graphique, comme cela sera développé ci-après avec la description des Figures 3, 4, et 5.

La Figure 3 représente un diagramme d'analyse de phases d'un mélange comportant 45% d'huile et 55% d'eau obtenu avec un appareil selon l'invention comportant une cellule de mesure à fond plat placée verticalement, le mélange présentant une surface libre en partie supérieure de la cellule de mesure. Le mélange a été agité à un instant T = 0 et se présente sous la forme d'une émulsion fortement turbide. Les courbes Cr₁-Cr₁₅ de rétrodiffusion illustrent plusieurs cycles de mesures sur une hauteur de mélange de 60 mm à des instants différents de l'instant T = 0 pour Cr₁ à l'instant T = 140 mn pour Cr₁₅, comme le montre la Figure 3. Chaque courbe est constituée de 1500 détections à raison d'une détection tous les 40 micromètres. L'intervalle de temps entre deux cycles de mesures est régulier et égal à 10 mn à partir de l'instant T = 0, et le temps nécessaire à un cycle de mesure est d'environ 5 secondes. La droite des abscisses est graduée en mm représentant l'unité de hauteur de mélange et la droite des ordonnées est graduée en % représentant la quantité de rayonnement rétrodiffusé par le mélange par rapport à la quantité de rayonnement rétrodiffusé par un élément étalon interne.

Sur la Figure 3, la zone hachurée 50 entre les courbes Cr₁ et Cr₂ illustre un phénomène naissant de rupture en deux émulsions de taille et de concentration particulaire différentes, et la zone hachurée 51 entre les courbes Cr₁ et Cr₂ illustre un phénomène naissant, déjà à un stade avancé, de coalescence dans le mélange.

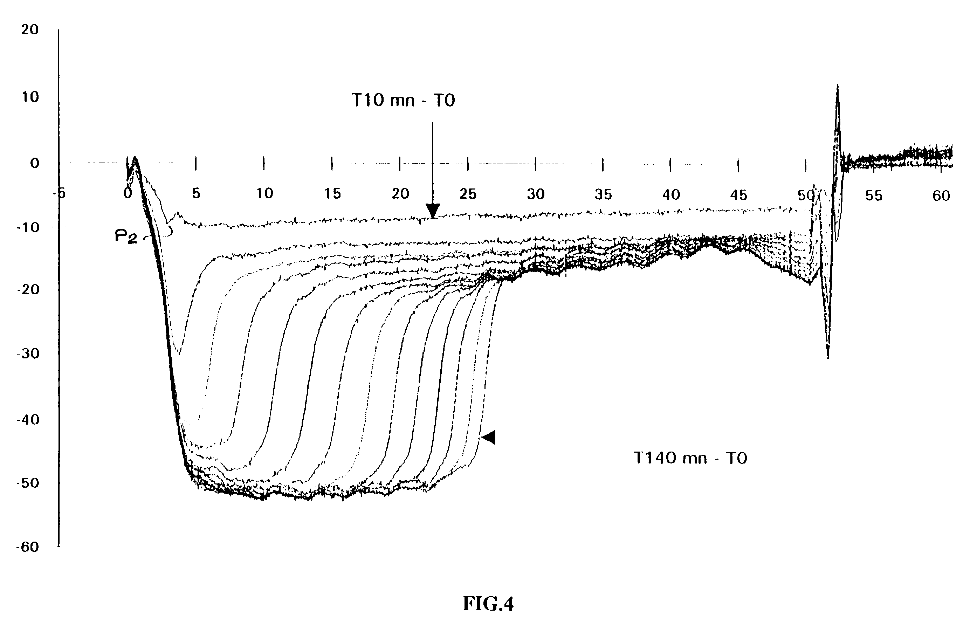

La Figure 4 illustre un exemple de traitement des cycles de mesures de la Figure 3, dans lequel on a soustrait détection par détection, pour chaque courbe Cr₂-Cr₁₅, respectivement la valeur de la courbe Cr₁ à l'instant T = 0, mettant ainsi en valeur une analyse de l'évolution du mélange au cours des cycles de mesures successifs. Par exemple, sur la Figure 4, la courbe référencée T10 mn - T0 est égale à la courbe Cr₂ (à l'instant T = 10 mn) moins la courbe Cr₁ (à l'instant T = 0) sur la Figure 3.

La Figure 4 met notamment en valeur, par le pic P₂ ressortant de ce traitement, l'apparition du phénomène naissant de rupture déjà évoqué.

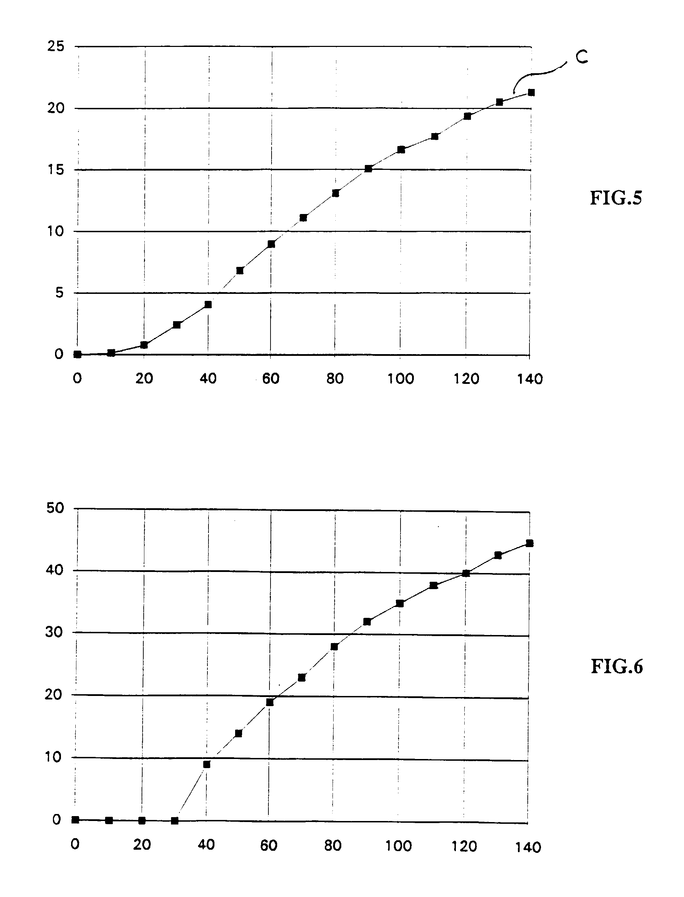

La Figure 5 illustre une comparaison des cycles de mesures traités de la Figure 4, dans laquelle chaque point de la courbe C illustre la variation de la quantité de rayonnement rétrodiffusé provoquée par une rupture dans le mélange rapportée à la quantité de rayonnement rétrodiffusé par le mélange à l'instant T = 0, en fonction du temps. La droite des abscisses est graduée en mn et la droite des ordonnées est graduée en %. Chaque point respectif de la courbe C est déduit d'une courbe respective de la Figure 4, par intégration des pics de rupture respectifs de chaque courbe. La courbe C montre la cinétique de rupture du mélange.

On remarquera la rapidité et la précision avec laquelle il est possible de détecter le phénomène naissant de crémage, la courbe C de la Figure 5 faisant apparaître ce phénomène au bout de quelques minutes seulement, comparativement à la courbe de la Figure 6 qui a été établie en fonction des appréciations visuelles du phénomène par un utilisateur. Il est à noter que pour la Figure 6, la droite des ordonnées est graduée en % de hauteur de mélange.

## Revendications

1. Procédé d'analyse des phases d'un mélange polyphasique, comprenant au moins les étapes suivantes :
- placer ledit mélange dans une cellule de mesure tubulaire de section cylindrique,
- émettre un rayonnement électromagnétique en direction de ladite cellule de mesure,
***caractérisé en ce que*** ledit procédé consiste à :
- détecter le rayonnement électromagnétique rétrodiffusé par ledit mélange dans un plan (P) perpendiculaire à un axe longitudinal de ladite cellule de mesure tubulaire, ledit axe longitudinal étant disposé verticalement, et ladite cellule de mesure étant transparente,
- effectuer une pluralité de détections dudit rayonnement électromagnétique rétrodiffusé selon un pas déterminé sur la longueur totale de l'axe longitudinal de ladite cellule de mesure tubulaire, ladite pluralité de détections constituant un cycle de mesures dudit mélange formant un profil de phase dudit mélange.

2. Procédé suivant la Revendication 1, ***caractérisé en ce qu'il*** consiste à:
- détecter le rayonnement électromagnétique transmis par ledit mélange dans ledit plan (P) perpendiculaire à l'axe longitudinal de ladite cellule de mesure tubulaire,
- effectuer une pluralité de détections dudit rayonnement électromagnétique transmis selon ledit pas, ladite pluralité de détections dudit rayonnement électromagnétique transmis étant incluse dans ledit cycle de mesures dudit mélange.

3. Procédé suivant la Revendication 1 ou 2, ***caractérisé en ce que*** ledit plan (P) a une épaisseur comprise entre 30 et 50 micromètres.

4. Procédé suivant l'une quelconque des Revendications 1 à 3, ***caractérisé en ce que*** ledit rayonnement électromagnétique rétrodiffusé est détecté selon un angle (α) compris entre 90° et 180° par rapport à la direction d'émission dudit rayonnement électromagnétique.

5. Procédé suivant la Revendication 4, ***caractérisé en ce que*** ledit angle (α) est égal à 135°.

6. Procédé suivant l'une quelconque des Revendications 1 à 5, ***caractérisé en ce qu'***il consiste à détecter ledit rayonnement électromagnétique rétrodiffusé à un point (37) de l'interface cellule-mélange.

7. Procédé suivant l'une quelconque des Revendications 2 à 6, ***caractérisé en ce que*** ledit rayonnement électromagnétique transmis est détecté face à la direction d'émission dudit rayonnement électromagnétique.

8. Procédé suivant l'une quelconque des Revendications 1 à 7, ***caractérisé en ce qu***'il consiste à renouveler ledit cycle de mesures selon un intervalle de temps déterminé.

9. Procédé suivant l'une quelconque des Revendications 1 à 8, ***caractérisé en ce*** qu'il consiste à mettre en mémoire au moins un desdits cycles de mesures.

10. Procédé suivant la Revendication 9, ***caractérisé en ce qu'***il consiste à traiter lesdits cycles de mesures, et à comparer ces derniers afin de connaître l'évolution des phases dans ledit mélange entre lesdits cycles de mesures.

11. Appareil d'analyse des phases d'au moins un mélange polyphasique, comprenant au moins une cellule de mesure tubulaire de section cylindrique pour loger ledit mélange, des moyens d'émission d'un rayonnement électromagnétique en direction de ladite cellule de mesure, ***caractérisé en ce que*** ledit appareil comprend des premiers moyens (7) de détection pour détecter un rayonnement électromagnétique rétrodiffusé par ledit mélange dans un plan (P) perpendiculaire à un axe longitudinal (33) de ladite cellule de mesure tubulaire (1), ledit axe longitudinal étant disposé verticalement et ladite cellule de mesure étant transparente, des moyens (10, 11) de déplacement desdits premiers moyens de détection pour effectuer une pluralité de détections selon un pas déterminé sur la longueur totale dudit axe longitudinal de ladite cellule de mesure tubulaire, ladite pluralité de détections constituant un cycle de mesures dudit mélange formant un profil de phase dudit mélange.

12. Appareil suivant la Revendication 11, ***caractérisé en ce que*** ladite cellule de mesure comporte une partie tubulaire (30) de section circulaire logeant ledit mélange.

13. Appareil suivant la Revendication 1 ou 12, ***caractérisé en ce qu***'il comprend des deuxièmes moyens (4) de détection pour détecter un rayonnement électromagnétique transmis par ledit mélange dans ledit plan (P) perpendiculaire à l'axe longitudinal de ladite cellule de mesure tubulaire, lesdits moyens (10, 11) de déplacement étant aptes à déplacer lesdits deuxièmes moyens de détection pour effectuer une pluralité de détections du rayonnement électromagnétique transmis selon ledit pas, ladite pluralité de détections du rayonnement électromagnétique transmis étant incluse dans ledit cycle de mesures dudit mélange.

14. Appareil suivant l'une quelconque des Revendications 11 à 13, ***caractérisé en ce que*** lesdits premiers moyens de détection, ou lesdits premiers et deuxièmes moyens de détection comprennent une première (8) fente rectiligne, ou une première et une deuxième (3) fentes rectilignes respectivement, ladite première fente rectiligne, ou lesdites première et deuxième fentes rectilignes étant comprises dans ledit plan (P).

15. Appareil suivant la Revendication 14, ***caractérisé en ce que*** ladite première (8) fente rectiligne, ou lesdites première (8) et deuxième (3) fentes rectilignes possèdent une largeur comprise entre 30 et 50 micromètres.

16. Appareil suivant la Revendication 14 ou 15, ***caractérisé en ce que*** lesdits premiers moyens (7, 8) de détection sont placés selon un angle (α) compris entre 90° et 180° par rapport à la direction d'émission dudit rayonnement électromagnétique.

17. Appareil suivant la Revendication 16, ***caractérisé en ce que*** ledit angle (α) est égal à 135°.

18. Appareil suivant l'une quelconque des Revendications 11 à 17, ***caractérisé en ce que*** lesdits moyens d'émission d'un rayonnement électromagnétique en direction de ladite cellule de mesure comprennent une troisième (6) fente rectiligne dont l'axe longitudinal est sécant avec l'axe longitudinal de ladite première (8) fente rectiligne à un point (37) de l'interface cellule-mélange.

19. Appareil suivant l'une quelconque des Revendications 11 à 18, ***caractérisé en ce que*** lesdits deuxièmes moyens (4) de détection sont placés face à la direction d'émission dudit rayonnement électromagnétique.

20. Appareil suivant l'une quelconque des Revendications 11 à 19, ***caractérisé en ce qu***'il comprend des moyens de mesure du temps pour renouveler ledit cycle de mesures selon un intervalle de temps déterminé.

21. Appareil suivant l'une quelconque des Revendications 11 à 20, ***caractérisé en ce qu'***il comprend des moyens de mémoire d'au moins un desdits cycles de mesures.

22. Appareil suivant la Revendication 21, ***caractérisé en ce qu'***il comprend des moyens de traitement au moins desdits cycles de mesures, et des moyens de comparaison de ces derniers afin de connaître l'évolution des phases dans ledit mélange entre lesdits cycles de mesures.

## Patentansprüche

1. Verfahren zur Analyse von Phasen eines mehrphasigen Gemisches, das mindestens folgende Stufen umfaßt:
- Einbringen des besagten Gemisches in eine röhrenförmige Meßzelle mit zylindrischem Schnitt,
- Aussenden einer elektromagnetischen Strahlung in Richtung der obengenannten Meßzelle,
**dadurch gekennzeichnet,** daß besagtes Verfahren darin besteht:
- die durch obengenanntes Gemisch zurückgestreute elektromagnetische Strahlung auf einer Fläche (P) senkrecht zu einer longitudinalen Achse der röhrenförmigen Meßzelle zu detektieren, wobei besagte longitudinale Achse vertikal angeordnet und die Meßzelle transparent ist,
- eine Vielzahl von Detektionen der zurückgestreuten elektromagnetischen Strahlung auszuführen, gemäß einer festgelegten Schrittfolge auf der ganzen Länge der longitudinalen Achse der röhrenförmigen Meßzelle, wobei besagte Vielzahl an Detektionen einen Meßzyklus des Gemisches bilden und ein Phasenprofil des obengenannten Gemisches ergeben.

2. Verfahren gemäß Anspruch 1,
**dadurch gekennzeichnet,** daß es darin besteht die durch das Gemisch transmittierte elektromagnetische Strahlung auf besagter Fläche, senkrecht zu der longitudinalen Achse der röhrenförmigen Meßzelle, zu detektieren und eine Vielzahl von Detektionen dieser transmittierten Strahlung auszuführen gemäß obengenannter Schrittfolge, wobei die Vielzahl von Detektionen der transmittierten Strahlung in den Meßzyklus des Gemisches integriert ist.

3. Verfahren gemäß Anspruch 1 oder 2,
**dadurch gekennzeichnet,** daß besagte Fläche (P) eine Dicke zwischen 30 und 50 Mikrometern umfaßt.

4. Verfahren gemäß irgendeinem der Ansprüche 1 bis 3,
**dadurch gekennzeichnet,** daß die zurückgestreute elektromagnetische Strahlung in einem Winkel (α) detektiert wird, der zwischen 90° und 180° hinsichtlich der Emissionsrichtung der elektromagnetischen Strahlung umfaßt.

5. Verfahren gemäß Anspruch 4,
**dadurch gekennzeichnet,** daß besagter Winkel (α) gleich 135° ist.

6. Verfahren gemäß irgendeinem der Ansprüchen 1 bis 5,
**dadurch gekennzeichnet,** daß es darin besteht die zurückgestreute elektromagnetische Strahlung an einem Punkt (37) der Zellen-Gemisch-Grenzfläche zu detektieren.

7. Verfahren gemäß irgendeinem der Ansprüche 2 bis 6,
**dadurch gekennzeichnet,** daß die transmittierte elektromagnetische Strahlung gegenüberliegend zur Emissionsrichtung der elektromagnetischen Strahlung detektiert wird.

8. Verfahren gemäß irgendeinem der Ansprüche 1 bis 7,
**dadurch gekennzeichnet,** daß es darin besteht, den obengenannten Meßzyklus nach einem bestimmten Zeitintervall zu erneuern.

9. Verfahren gemäß irgendeinem der Ansprüche 1 bis 8,
**dadurch gekennzeichnet,** daß es dann besteht, mindestens einen der obengenannten Meßzyklen zu speichern.

10. Verfahren gemäß Anspruch 9,
**dadurch gekennzeichnet,** daß es darin besteht, die Meßzyklen zu bearbeiten und diese letztgenannten zu vergleichen, um die Entwicklung der Phasen in dem Gemisch zwischen den Meßzyklen zu erkennen.

11. Vorrichtung zur Analyse von Phasen für mindestens ein mehrphasiges Gemisch, die mindestens eine röhrenförmige Meßzelle mit zylindrischem Schnitt zur Aufnahme von obengenanntem Gemisch und Mittel zur Emission von elektromagnetischer Strahlung in Richtung auf obengenannte Meßzelle enthält,
**dadurch gekennzeichnet,** daß besagte Vorrichtung umfaßt:
erste Mittel (7) zur Detektion, um eine durch das Gemisch zurückgestreute elektromagnetische Strahlung in einer Fläche (P), die senkrecht zu einer longitudinalen Achse (33) der röhrenförmigen Meßzelle (1) angeordnet ist, zu detektieren, wobei die longitudinale Achse vertikal angeordnet und die Meßzelle transparent ist, und Mittel (10, 11) zur Verschiebung der ersten Detektionsmittel, um eine Vielzahl an Detektionen nach einer festgelegten Schrittfolge über die ganze Länge der longitudinalen Achse der röhrenförmigen Meßzelle auszuführen, wobei besagte Vielzahl an Detektionen einen Meßzyklus des Gemisches bilden und somit ein Phasenprofil des obengenannten Gemisches ergeben.

12. Vorrichtung gemäß Anspruch 11,
**dadurch gekennzeichnet,** daß die Meßzelle einen röhrenförmigen Teil (30) mit kreisförmigem Querschnitt aufweist, der das Gemisch aufnimmt.

13. Vorrichtung gemäß Anspruch 11 oder 12,
**dadurch gekennzeichnet,**daß sie einschließt:
zweite Mittel (4) zur Detektion, um die durch das Gemisch transmittierte elektromagnetische Strahlung in obengenannter Fläche (P), senkrecht zur longitudinalen Achse der röhrenförmigen Meßzelle, zu detektieren, und die Mittel (10, 11) zur Verschiebung in der Lage sind, die zweiten Mittel zur Detektion zu verschieben, um eine Vielzahl an Detektionen der transmittierten elektromagnetischen Strahlung nach obengenannter Schrittfolge auszuführen, wobei besagte Vielzahl an Detektionen der transmittierten Strahlung in den Meßzyklus des Gemisches eingeschlossen ist.

14. Vorrichtung gemäß irgendeiner der Ansprüche 11 bis 13,
**dadurch gekennzeichnet,** daß die ersten Mittel zur Detektion, oder die ersten und zweiten Mittel zur Detektion, eine erste (8) geradlinige Spalte, oder entsprechend eine erste und zweite (3) geradlinige Spalte, einschließen, wobei die erste gradlinige Spalte, oder die erste und zweite geradlinige Spalte, in besagte Fläche (P) eingeschlossen sind.

15. Vorrichtung gemäß Anspruch 14,
**dadurch gekennzeichnet,** daß die erste (8) gradlinige Spalte, oder besagte erste (8) und zweite (3) geradlinige Spalte, eine Weite besitzen, die zwischen 30 und 50 Mikrometern umfaßt.

16. Vorrichtung gemäß Anspruch 14 oder 15,
**dadurch gekennzeichnet,** daß die ersten Mittel (7, 8) der Detektion in einem Winkel (α) plaziert sind, der zwischen 90° und 180° hinsichtlich der Emissionsrichtung der elektromagnetischen Strahlung umfaßt.

17. Vorrichtung gemäß Anspruch 16,
**dadurch gekennzeichnet,** daß obengenannter Winkel (α) gleich 135° ist.

18. Vorrichtung gemäß irgendeiner der Ansprüche 11 bis 17,
**dadurch gekennzeichnet,** daß besagte Emissionsmittel der elektromagnetischen Strahlung in Richtung der Meßzelle eine dritte (6) geradlinige Spalte einschließen, deren longitudinale Achse die longitudinale Achse der ersten (8) geradlinigen Spalte in einem Punkt (37) der Zellen-Gemisch-Grenzfläche schneidet.

19. Vorrichtung gemäß irgendeiner der Ansprüche 11 bis 18,
**dadurch gekennzeichnet,** daß die zweiten Mittel (4) zur Detektion gegenüberliegend zur Emissionsrichtung der obengenannten elektromagnetischen Strahlung plaziert sind.

20. Vorrichtung gemäß irgendeiner der Ansprüche 11 bis 19,
**dadurch gekennzeichnet,** daß sie Mittel zur Zeitmessung einschließt, um obengenannten Meßzyklus gemäß einem festgelegten Zeitintervall zu erneuern.

21. Vorrichtung gemäß irgendeiner der Ansprüche 11 bis 20,
**dadurch gekennzeichnet,** daß sie Mittel einschließt, die mindestens einen der obengenannten Meßzyklen speichern.

22. Vorrichtung gemäß Anspruch 21,
**dadurch gekennzeichnet,** daß sie Mittel zur Bearbeitung wenigstens der obengenannten Meßzyklen und Mittel zum Vergleichen derselben einschließt, um die Entwicklung der Phasen im Gemisch zwischen den einzelnen Meßzyklen zu erkennen.

## Claims

1. Method of analysing the phases of a multi-phase mixture, including at least the following steps:
- place said mixture in a tubular measurement cell of cylindrical cross-section,
- emit an electromagnetic radiation in the direction of said measurement cell,
characterised in that said method comprises:
- detecting the electromagnetic radiation which is backscattered by said mixture in a plane (P) which is perpendicular to a longitudinal axis of said tubular measurement cell, said longitudinal axis being vertically disposed, and said measurement cell being transparent,
- carrying out a plurality of detections of said electromagnetic radiation which is backscattered at a predetermined rate over the total length of the longitudinal axis of said tubular measurement cell, said plurality of detections comprising a measurement cycle of said mixture forming a phase profile of said mixture.

2. Method according to claim 1, characterised in that it comprises:
- detecting the electromagnetic radiation transmitted by said mixture in said plane (P) which is perpendicular to the longitudinal axis of said tubular measurement cell,
- carrying out a plurality of detections of said electromagnetic radiation which is transmitted at said rate, said plurality of detections of said transmitted electromagnetic radiation being included in said measurement cycle of said mixture.

3. Method according to claim 1 or 2, characterised in that said plane (P) has a thickness between 30 and 50 micrometres.

4. Method according to any of claims 1 to 3, characterised in that said backscattered electromagnetic radiation is detected at an angle (α) between 90° and 180° with respect to the direction of emission of said electromagnetic radiation.

5. Method according to claim 4, characterised in that said angle (α) is equal to 135°.

6. Method according to any of claims 1 to 5, characterised in that it comprises detecting said electromagnetic radiation which is backscattered at a point (37) of the cell-mixture interface.

7. Method according to any of claims 2 to 6, characterised in that said transmitted electromagnetic radiation is detected facing the direction of emission of said electromagnetic radiation.

8. Method according to any of claims 1 to 7, characterised in that it comprises repeating said measurement cycle at a predetermined time interval.

9. Method according to any of claims 1 to 8, characterised in that it comprises storing at least one of said measurement cycles.

10. Method according to claim 9, characterised in that it comprises processing said measurement cycles and comparing the latter in order to understand the evolution of the phases in said mixture between said measurement cycles.

11. Apparatus for analysing the phases of at least one multi-phase mixture, including at least one tubular measurement cell of cylindrical cross-section for accommodating said mixture, and means for emitting an electromagnetic radiation in the direction of said measurement cell, characterised in that said apparatus includes first detection means (7) for detecting an electromagnetic radiation backscattered by said mixture in a plane (P) which is perpendicular to a longitudinal axis (33) of said tubular measurement cell (1), said longitudinal axis being vertically disposed, and said measurement cell being transparent, and means (10, 11) for displacing said first detection means in order to carry out a plurality of detections at a predetermined rate over the total length of said longitudinal axis of said tubular measurement cell, said plurality of detections comprising a measurement cycle of said mixture forming a phase profile of said mixture.

12. Apparatus according to claim 11, characterised in that said measurement cell includes a tubular part (30) of circular cross-section accommodating said mixture.

13. Apparatus according to claim 11 or 12, characterised in that it includes second detection means (4) for detecting electromagnetic radiation transmitted by said mixture in said plane (P) which is perpendicular to the longitudinal axis of said tubular measurement cell, said displacement means (10, 11) being capable of displacing said second detection means in order to carry out a plurality of detections of the electromagnetic radiation transmitted at said rate, said plurality of detections of the transmitted electromagnetic radiation being included in said measurement cycle of said mixture.

14. Apparatus according to any of claims 11 to 13, characterised in that said first detection means, or said first and second detection means, include a first rectilinear slit (8), or a first rectilinear slit and a second rectilinear slit (3) respectively, said first rectilinear slit, or said first and second rectilinear slits, being included in said plane (P).

15. Apparatus according to claim 14, characterised in that said first rectilinear slit (8), or said first rectilinear slit (8) and second rectilinear slit (3), have a width between 30 and 50 micrometres.

16. Apparatus according to claim 14 or 15, characterised in that said first detection means (7, 8) are placed at an angle (α) between 90° and 180° with respect to the direction of emission of said electromagnetic radiation.

17. Apparatus according to claim 16, characterised in that said angle (α) is equal to 135°.

18. Apparatus according to any of claims 11 to 17, characterised in that said means for emitting an electromagnetic radiation in the direction of said measurement cell include a third rectilinear slit (6), the longitudinal axis of which is secant with the longitudinal axis of said first rectilinear slit (8) at a point (37) of the cell-mixture interface.

19. Apparatus according to any of claims 11 to 18, characterised in that said second detection means (4) are placed facing the direction of emission of said electromagnetic radiation.

20. Apparatus according to any of claims 11 to 19, characterised in that it includes means for measuring the time in order to repeat said measurement cycle at a predetermined time interval.

21. Apparatus according to any of claims 11 to 20, characterised in that it includes means for storing at least one of said measurement cycles.

22. Apparatus according to claim 21, characterised in that it includes means for processing at least said measurement cycles, and means for comparing the latter in order to understand the evolution of the phases in said mixture between said measurement cycles.
